# EUROPEAN PATENT APPLICATION

(11) **EP 4 668 858 A1**
(43) Date of publication of application: **24.12.2025**
(21) Application number: 24788033.9
(22) Date of filing: 08.04.2024
(51) Int. Cl.: H04W 36/00

(54) **CONDITIONAL HANDOVER METHOD, APPARATUS AND DEVICE**

(30) Priority: 12.04.2023 CN 202310383327
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LIU, Xiaoman, Beijing 100053 (CN)
(74) Representative: Murgitroyd & Company
(86) International application number: PCT/CN2024/086641
(87) International publication number: WO 2024/212930

(57) **Abstract**

This disclosure discloses a conditional handover method, apparatus and device. The method includes: sending a handover execution condition and an access resource to a terminal; wherein the access resource is provided by a handover candidate cell and is used for turning on or off of one or more features, and the handover execution condition includes turning on or off of a specified feature, and/or a measurement condition, and/or a timer condition.

## Description

### CROSS-REFERENCE TO RELATED APPLICATION

This application is based on and claims priority to the Chinese patent application No. 202310383327.0 filed on April 12, 2023, disclosure of which is incorporated herein by reference in its entirety.

### TECHNICAL FIELD

The present disclosure belongs to the field of communication technology, and particularly relates to a conditional handover method, apparatus and device.

### BACKGROUND

In related art, both network energy saving (NES) and multicast broadcast service (MBS) involve scenarios where multiple terminals (e.g., user equipment (UE)) need to be handed over. A network side device sends handover commands and provides corresponding handover configurations to the UEs through per-UE radio resource control (RRC) signaling. This incurs a large amount of signaling overheads in a short period of time. Especially for an NES scenario, this increases the latency for the network side device to enter the NES state.

### SUMMARY

Embodiments of the present disclosure provide a conditional handover method, apparatus, and device to solve the problem of high signaling overhead for conditional handover.

In a first aspect, a conditional handover method is provided, which is performed by a first network side device, and includes:
sending a handover execution condition and access resource(s) to a terminal;
wherein the access resource is provided by a handover candidate cell and is used for turning on or off of one or more features, and the handover execution condition includes turning on or off of a specified feature, and/or a measurement condition, and/or a timer condition.

Optionally, before sending the handover execution condition and the access resource to the terminal, the method further includes:
selecting at least some of neighboring cells as the handover candidate cells; and
obtaining access resources provided by the handover candidate cells for turning on or off of the one or more features.

Optionally, before selecting some of neighboring cells as the handover candidate cells, the method further includes:
sending first information to a second network side device in a neighboring cell, wherein the first information is used for at least one of the following:
requesting the neighboring cell to serve as the handover candidate cell;
indicating a feature supported by a serving cell;
indicating a current load status;
indicating a number of terminals expected to be admitted.

Optionally, the method further includes:
sending second information to the terminal, wherein the second information is used for indicating at least one of the following:
the access resource is used for turning on or off of multiple specified features;
an access priority of the handover candidate cell;
a measurement priority of the handover candidate cell;
a priority of a measurement condition of the handover candidate cell;
the specified feature is turned on or off; or
a target cell.

Optionally, the feature includes at least one of: network energy saving (NES), multicast broadcast service (MBS), or RedCap UE.

Optionally, for NES, turning on or off of the feature includes at least one of the following: cell turning off or on, frequency domain or spatial domain parameter adjustment, increasing or decreasing a transmission periodicity of a common signal, activating or deactivating cell discontinuous transmission and/or cell discontinuous reception, adjusting cell discontinuous transmission or discontinuous reception periodicity, or a network entering different sleep states or data transmission and reception states of NES;
or,
for MBS, turning on or off of the feature includes at least one of the following: support or non-support of MBS in a cell, support or non-support of reception of MBS in an inactive state, or provision or non-provision of a specified MBS service;
   or,
for RedCap, turning on or off of the feature includes at least one of the following: supporting 20M RedCap UE or supporting 5M RedCap UE.

In a second aspect, a conditional handover method is provided, which is performed by a terminal and includes:
obtaining a handover execution condition and an access resource; and
performing handover according to the handover execution condition and the access resource;
wherein the access resource is provided by a handover candidate cell and is used for turning on or off of one or more features, and the handover execution condition includes turning on or off of a specified feature, and/or a measurement condition.

Optionally, the method further includes:
receiving second information, wherein the second information is used for indicating at least one of the following:
the access resource is used for turning on or off of multiple features;
an access priority of the handover candidate cell;
a measurement priority of the handover candidate cell;
a priority of a measurement condition of the handover candidate cell;
a feature supported by a serving cell is turned on or off; or
a target cell.

Optionally, the method further includes:
according to different NES states entered by a serving cell, determining whether it is necessary to perform handover according to the handover execution condition and the access resource.

Optionally, performing handover according to the handover execution condition includes:
in a case that the handover execution condition includes turning on or off of the specified feature, and the specified feature supported by a serving cell is turned on or off, performing the handover;
   or,
in a case that the handover execution condition includes the measurement condition and turning on or off of the specified feature, determining whether the handover candidate cell meets the measurement condition; in a case that the handover candidate cell meets the measurement condition, determining whether the serving cell indicates that the specified feature is turned on or off; and in a case that the specified feature is turned on or off, performing the handover;
   or,
in a case that the handover execution condition includes the measurement condition and turning on or off of the specified feature, measuring the handover candidate cell; in a case that the serving cell indicates that the specified feature is turned on or off, determining whether the handover candidate cell meets the measurement condition, and in a case that the handover candidate cell meets the measurement condition, performing the handover;
   or,
in a case that the handover execution condition includes a timer condition and a handover timer elapses, performing the handover;
   or,
in a case that the handover execution condition includes turning on or off of the specified feature, the timer condition and the measurement condition, and the handover timer elapses, determining whether the serving cell indicates that the specified feature is turned on or off, and in a case that the specified feature is turned on or off, performing the handover;
   or,
in a case that the handover execution condition includes the timer condition and the measurement condition, and the handover timer elapses, determining whether the handover candidate cell meets the measurement condition, and in a case that the handover candidate cell meets the measurement condition, performing the handover.

In a third aspect, a conditional handover apparatus is provided, which is applied to a first network side device, and includes:
a first sending module, configured to send a handover execution condition and an access resource to a terminal;
wherein the access resource is provided by a handover candidate cell and is used for turning on or off of one or more features, and the handover execution condition includes turning on or off of a specified feature, and/or a measurement condition, and/or a timer condition.

In a fourth aspect, a conditional handover apparatus is provided, which is applied to a terminal and includes:
a second obtaining module, configured to obtain a handover execution condition and an access resource; and
a handover module, configured to perform handover according to the handover execution condition and the access resource;
wherein the access resource is provided by a handover candidate cell and is used for turning on or off of one or more features, and the handover execution condition includes turning on or off of a specified feature, and/or a measurement condition, and/or a timer condition.

In a fifth aspect, a communication device is provided, including: a memory, a transceiver, and a processor; wherein the memory is configured to store a computer program; and the processor is configured to implement the steps of the method described in the first aspect or the second aspect.

In a sixth aspect, a processor-readable storage medium is provided, on which a computer program is stored. When the computer program is executed by a processor, the steps of the method described in the first aspect or the second aspect are implemented.

In the embodiments of the present disclosure, the network side device provides the terminal with an access resource and a handover execution condition related to the turning on or off of a certain feature. This allows multiple terminals to directly perform handover based on pre-configured access resources even if they do not receive a handover command when a certain feature is turned on or off, thereby avoiding the additional signaling overhead and excessive handover delay caused by sending multiple handover commands, and enabling the network to realize the use/termination of a certain feature as soon as possible.

### BRIEF DESCRIPTION OF THE DRAWINGS

Fig. 1 is a flow chart of a conditional handover method according to an embodiment of the present invention;
Fig. 2 is another flow chart of a conditional handover method according to an embodiment of the present invention;
Fig. 3 is yet another flow chart of a conditional handover method according to an embodiment of the present invention;
Fig. 4 is a schematic diagram of a conditional handover apparatus according to an embodiment of the present invention;
Fig. 5 is another schematic diagram of a conditional handover apparatus according to an embodiment of the present invention;
Fig. 6 is a schematic diagram of a communication device according to an embodiment of the present invention.

### DETAILED DESCRIPTION

The following will be combined with the accompanying drawings in the embodiments of the present disclosure to clearly describe the technical solutions in the embodiments of the present disclosure. Obviously, the embodiments described are part of the embodiments of the present disclosure, not all of the embodiments. Based on the embodiments of the present disclosure, all other embodiments obtained by ordinary technicians in this field are within the scope of the present disclosure.

The terms "first", "second" and the like in the specification and claims of the present disclosure are used to distinguish similar objects and are not necessarily used to describe a particular order or sequential sequence. It should be understood that the terms used in this way are interchangeable where appropriate, so that the embodiments of the present disclosure can be implemented in an order other than those illustrated or described herein, and the objects distinguished by "first" and "second" are generally of the same type, and do not limit the number of objects. For example, there may be one or more first objects. In addition, "and/or" in the specification and claims represents at least one of the connected objects, and the character "/" generally indicates that the objects associated with each other are in an "or" relationship.

In related art, New Radio (NR) supports conditional handover (CHO). CHO refers to: when corresponding access resource and handover execution condition are configured for a UE, the UE monitors the occasion where the condition is met and autonomously initiates handover when the condition is met. CHO can be used to solve the problem of handover failure in high-frequency or high-speed mobility scenarios.

In related art, network energy saving (NES) is discussed. A network side device can enter an NES state or a non-NES state to serve multiple UEs. When the network side device has a state change, especially from the non-NES state to the NES state, multiple UEs may need to be handed over.

The network side device can determine whether the UE or an MBS session is received in an inactive state. Therefore, when an MBS session is only provided in the inactive state, there are scenarios where multiple UEs in a connected state need to be handed over.

For reduced capability (RedCap) UE, when the network reconfigures a dedicated bandwidth part (BWP) and exceeds the UE capability (e.g., 20M), the UE needs to be handed over to another cell.

We can consider solving the above problems by pre-configuring handover resources based on CHO. However, the conventional CHO design only considers channel quality, but not the network's support for a certain feature, so it cannot fully meet the requirements.

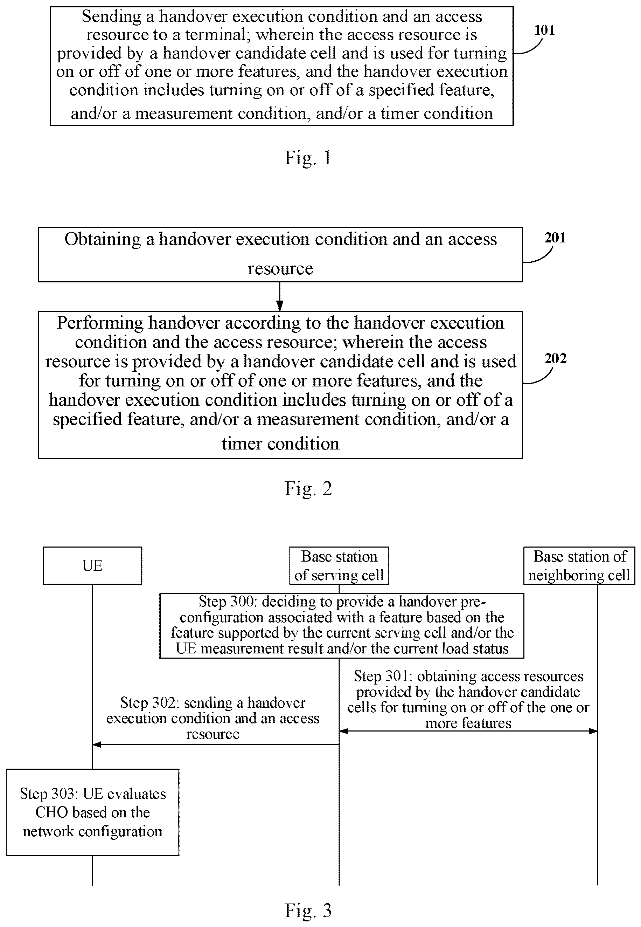

Referring to Fig. 1, an embodiment of the present disclosure provides a conditional handover method, which is performed by a first network side device, and includes: Step 101.

Step 101: sending a handover execution condition and an access resource to a terminal;
wherein the access resource is provided by a handover candidate cell and is used for turning on or off of one or more features, and the handover execution condition includes turning on or off of a specified feature, and/or a measurement condition, and/or a timer condition.

The turning on or off of a specified feature may refer to: the specified feature of the serving cell and/or the handover candidate cell being turned on or off, that is, the handover is performed when the specified feature of the serving cell or the handover candidate cell is turned on or off. The measurement condition includes but is not limited to A3 or A5 events, that is, the handover is performed when the A3 or A5 events are met. The timer condition includes but is not limited to whether a handover timer has elapsed, that is, the handover is performed when the handover timer has elapsed.

In an implementation of the present disclosure, the feature includes at least one of: network energy saving (NES), multicast broadcast service (MBS), or RedCap UE.

In an implementation of the present disclosure, the method further includes:
determining whether to provide the handover execution condition and/or the access resource to the terminal according to at least one of: the feature supported by the serving cell, the measurement result of the terminal, or the current load status.

In an implementation of the present disclosure, before sending the handover execution condition and the access resource to the terminal, the method further includes:
selecting at least some of neighboring cells as the handover candidate cells; and
obtaining access resources provided by the handover candidate cells for turning on or off of one or more features.

For example, the first network side device may select at least some of neighboring cells as the handover candidate cells by using a feature being turned on or off as a filtering criterion. Alternatively, all neighboring cells may be selected as handover candidate cells, without using the feature being turned on or off as the filtering criterion.

In an implementation of the present disclosure, before selecting some of neighboring cells as the handover candidate cells, the method further includes:
sending first information to a second network side device in a neighboring cell, wherein the first information is used for at least one of the following:
(1) requesting the neighboring cell to serve as the handover candidate cell;
(2) indicating a feature supported by a serving cell;
(3) indicating a current load status; or
(4) indicating a number of terminals expected to be admitted.

In an implementation of the present disclosure, the method further includes:
sending second information to the terminal, wherein the second information is used for indicating at least one of the following:
(1) the access resource is used for turning on or off of multiple specified features;
(2) an access priority of the handover candidate cell;
(3) a measurement priority of the handover candidate cell;
(4) a priority of a measurement condition of the handover candidate cell;
(5) the specified feature is turned on or off; or
(6) a target cell.

In an implementation of the present disclosure, the second information includes at least one of the following: a system message, a radio resource control (RRC) dedicated signaling, a layer 1 or layer 2 signaling, a paging message, and a multicast control channel change notification.

In an implementation of the present disclosure, the sending the handover execution condition and the access resource to the terminal includes one of the following:
Mode 1: sending the handover execution condition and the access resource to the terminal via a system message;
Mode 2: sending the handover execution condition and the access resource to the terminal through RRC dedicated signaling;
Mode 3: sending the handover execution condition to the terminal through a system message, and sending the access resource to the terminal through RRC dedicated signaling;
Mode 4: sending the handover execution condition to the terminal via RRC dedicated signaling, and sending the access resource to the terminal via a system message.

In an implementation of the present disclosure, for NES, turning on or off of the feature includes at least one of the following: cell turning off or on, frequency domain or spatial domain parameter adjustment, increasing or decreasing a transmission periodicity of a common signal, activating or deactivating cell discontinuous transmission and/or cell discontinuous reception, adjusting cell discontinuous transmission or discontinuous reception periodicity, or a network entering different sleep states or data transmission and reception states of NES;
or,
for MBS, turning on or off of the feature includes at least one of the following: support or non-support of MBS in a cell, support or non-support of reception of MBS in an inactive state, or provision or non-provision of a specified MBS service;
   or,
for RedCap, turning on or off of the feature includes at least one of the following: supporting 20M RedCap UE or supporting 5M RedCap UE.

In the embodiment of the present disclosure, the network side device provides the terminal with the access resources and handover execution condition related to the turning on or off of a certain feature, so that when a certain feature is turned on or off, even if multiple terminals do not receive a handover command, they can directly perform handover based on the pre-configured access resources, thereby avoiding the additional signaling overhead and excessive handover delay caused by sending multiple handover commands, and enabling the network to realize the use/termination of a certain feature as soon as possible.

Referring to Fig. 2, an embodiment of the present disclosure provides a conditional handover method, which is performed by a terminal. The method includes step 201 and step 202:
Step 201: obtaining a handover execution condition and an access resource;
Step 202: performing handover according to the handover execution condition and the access resource;
wherein the access resource is provided by a handover candidate cell and is used for turning on or off of one or more features, and the handover execution condition includes turning on or off of a specified feature, and/or a measurement condition, and/or a timer condition.

In an implementation of the present disclosure, the terminal may determine whether step 202 needs to be performed according to whether the serving cell enters different NES states.

For example, when the serving cell enters a deep sleep state or is deactivated, the UE executes step 202 regardless of its channel quality condition; when the serving cell enters a light sleep state, the UE can decide whether to execute step 202 by comprehensively considering at least one of following factors: the supported service, the location of the UE, the current load of the cell, and the UE measurement result.

In an implementation of the present disclosure, the method further includes:
receiving second information, wherein the second information is used for indicating at least one of the following:
(1) the access resource is used for turning on or off of multiple features;
(2) an access priority of the handover candidate cell;
(3) a measurement priority of the handover candidate cell;
(4) a priority of a measurement condition of the handover candidate cell;
(5) a feature supported by a serving cell is turned on or off; or
(6) a target cell.

In an implementation of the present disclosure, the second information includes at least one of the following: a system message, an RRC dedicated signaling, a layer 1 or layer 2 signaling, a paging message, and a multicast control channel change notification.

In an implementation of the present disclosure, obtaining the handover execution condition and the access resource includes one of the following:
Method 1: obtaining the handover execution condition and the access resource through a system message;
Method 2: obtaining the handover execution condition and the access resource through RRC dedicated signaling;
Mode 3: obtaining the handover execution condition through a system message and obtaining the access resource through RRC dedicated signaling;
Mode 4: obtaining the handover execution condition through RRC dedicated signaling, and obtaining the access resource through a system message.

In an implementation of the present disclosure, performing handover according to the handover execution condition includes one of the following:
Mode 1: in a case that the handover execution condition includes turning on or off of the specified feature, and the specified feature supported by a serving cell is turned on or off, performing the handover;
Mode 2: in a case that the handover execution condition includes the measurement condition and turning on or off of the specified feature, determining whether the handover candidate cell meets the measurement condition; if the handover candidate cell meets the measurement condition, determining whether the serving cell indicates that the specified feature is turned on or off; if the serving cell indicates that the specified feature is turned on or off, performing the handover;
Mode 3: in a case that the handover execution condition includes the measurement condition and turning on or off of the specified feature, measuring the handover candidate cell; in a case that the serving cell indicates that the specified feature is turned on or off, determining whether the handover candidate cell meets the measurement condition; and in a case that the handover candidate cell meets the measurement condition, performing the handover;
Mode 4: in a case that the handover execution condition includes a timer condition and a handover timer elapses, performing the handover;
Mode 5: in a case that the handover execution condition includes turning on or off of the specified feature, the timer condition and the measurement condition, and the handover timer elapses, determining whether the serving cell indicates that the specified feature is turned on or off, and in a case that the specified feature is turned on or off, performing the handover;
Mode 6: in a case that the handover execution condition includes the timer condition and the measurement condition, and the handover timer elapses, determining whether the handover candidate cell meets the measurement condition, and in a case that the handover candidate cell meets the measurement condition, performing the handover.

In an implementation of the present disclosure, performing handover includes:
handing over to a target cell according to the access resource;
wherein the target cell is indicated by the first network side device, or determined by the terminal based on measurement, or selected by the terminal from the handover candidate cells. For example, the terminal selects, as the target cell, a handover candidate cell with low potential handover latency and/or whose supported services can better meet the UE's requirements, or the terminal selects, as the target cell, a handover candidate cell that provides the access resource and/or has not entered deep sleep state.

In the embodiment of the present disclosure, it is possible to enable the terminal to directly perform handover based on pre-configured access resources when a certain feature is turned on or off, avoiding the additional signaling overhead and excessive handover delay caused by the network side device sending the handover commands, enabling the network to realize the use/termination of a certain feature as soon as possible.

Referring to Fig. 3, the specific steps include step 300, step 301, step 302 and step 303.

Step 300: The current serving cell decides to provide a handover pre-configuration associated with a feature based on the feature supported by the current serving cell and/or the UE measurement result and/or the current load status.

Optionally, the handover pre-configuration includes a handover execution condition and an access resource, where the access resource is provided by a handover candidate cell and is used for turning on or off of one or more features, and the handover execution condition includes: turning on or off of a specified feature, and/or a measurement condition, and/or a timer condition.

Optionally, the feature includes but are not limited to at least one of the following: NES, MBS, redcap.

Step 301: The serving cell interacts with its neighboring cells to obtain access resources provided by the handover candidate cells for turning on or off of the one or more features.

When a serving cell supports multiple features, the serving cell may select some of neighboring cells as handover candidate cells related to a certain feature (e.g., if it is known based on interaction via the Xn interface that a candidate cell 1 only supports the MBS, then the serving cell will only request the candidate cell 1 to serve as a handover candidate cell for MBS), or the serving cell may indicate the features supported by the serving cell during the handover request or the interaction process before the handover request (e.g., when the Xn interface is established), so that the handover candidate cells can choose to provide access resources for the turning on or off of one or more features based on the features the handover candidate cells support and/or the handover candidate cells' willingness to provide the access resources, and the access resources may be shared among multiple features or exclusive to a certain feature. Since the turning on or off of a feature may cause more than one terminal to need to be handed over, the serving cell may indicate, when interacting with the neighboring cells, the current load status or the number of UEs expected to be admitted, so that the handover candidate cells provide sufficient resources.

For example, the handover candidate cell 1 gives the following feedback: NES: access resource 1, MBS: access resource 2, RedCap: access resource 3; and the handover candidate cell 2 gives the following feedback: NES+MBS: access resource 4.

Providing access resources exclusive to a feature facilitate better feature isolation, and the handover candidate cell can obtain the UE type through the use of access resources (especially for RedCap UE, which can assist base station scheduling); while access resource sharing can improve resource utilization and reduce resource waste.

In addition to access resources, neighboring cells can also provide feedback on whether a certain feature is currently turned on or off, as well as potential preparation delays. For example, for a target cell that supports NES, a neighboring cell can provide feedback on whether it is currently in (a certain) NES state, e.g., deep sleep and/or provide feedback on whether the transmission of synchronization signal and PBCH block (SSB) and/or system information block (SIB) is disabled, as well as the potential preparation delay required to resume the state capable of supporting UE access. Alternatively, neighboring cells can also provide feedback on service information. For example, for a target cell of MBS, feedback on information about an established MBS session can be provided.

Here, the features are turned on or off in different ways for different features.

For example, for NES, turning on or off of the feature may include, but is not limited to, at least one of the following: cell off/on, frequency domain/spatial domain parameter adjustment (such as decreasing/increasing transmit power, decreasing/increasing multiple-input multiple-output (MIMO) layers), increasing/decreasing the transmission periodicity of a common signal such as SSB, activating/deactivating cell discontinuous transmission (DTX) and/or cell discontinuous reception (DRX), adjusting the cell DTX/DRX periodicity, or a network entering different sleep states/data transmission and reception states of the NES (e.g., deep sleep, light sleep, micro sleep, active uplink (UL), active downlink (DL)).

For example, for MBS, turning on or off of a feature may include, but is not limited to, at least one of the following: support/non-support of the MBS in a cell, support/non-support of receiving MBS in an inactive state, or provision/non-provision of a specific MBS service.

For example, for RedCap, turning on or off of a feature may include, but is not limited to, at least one of the following: supporting 20M RedCap UE or supporting 5M RedCap UE.

Step 302: The serving cell provides a handover execution condition and an access resource for a certain feature, where the handover execution condition may be:
1) Measurement condition, such as configuring A3 event and A5 event; that is, the measurement condition can be a handover execution condition same as that of the existing mechanism;
2) The handover execution condition is the turning on and/or turning off of one or more features; the turning on and/or turning off of the feature here may only consider the turning on and/or turning off of the feature of the serving cell, or may consider both the turning on and/or turning off of the feature of the handover candidate cell and the turning on and/or turning off of the feature of the serving cell, or only consider the turning on and/or turning off of the feature of the handover candidate cell;
3) a joint configuration of 1) and 2) above, that is, considering the measurement while also considering the turning on and/or turning off of one or more features, in this case, the accessibility of each candidate cell is different; for example, handover candidate cell 1 is accessible in a case that feature 1 is turned on and the measurement condition is met, while handover candidate cell 2 is accessible when feature 2 is turned off and the measurement condition is met.

In addition, the handover execution condition as described in above 1), 2) and 3) can also take at least one of the cell load, services supported by the UE and the network, or the UE location into account.

For the handover candidate cells configured for the UE, the serving cell may filter, before the configuration, the handover candidate cells based on the feature being turned on or off, or the serving cell may not use the feature being turned on or off as a filtering criterion, but instead configure the feature support status of each handover candidate cell to the UE.

Considering that the access resources provided by the same handover candidate cell for different features may be shared between features, the serving cell may only provide one set of handover execution conditions and access resources, and indicate through RRC that they can be used for turning on/off of the multiple features.

In addition, based on the access resources provided by multiple handover candidate cells and the features supported, the network can indicate the access priorities of multiple cells for one or more UEs (the access priority of the same cell may be different for different UEs). The priority can also be used in cell selection when the UE fails to access a cell (e.g., a random access contention failure) and causes reselection/reestablishment.

In addition, the UE may obtain the above-mentioned handover execution conditions and access resources through direct broadcast of system messages, or through RRC dedicated signaling (and the handover execution condition and the access resource may be delivered in different respective ways, e.g., the handover execution condition is delivered through broadcast, and the access resources is delivered through RRC dedicated signaling). The UE may know that the feature is turned on/off by reading the corresponding indicator in the system message or by reading the configuration in the system message, or by reading the indication by the network through RRC dedicated signaling, L1/L2 signaling, paging message, or multicast control channel change notification (MCCH change notification).

The method of directly associating the handover execution condition with the turning on or off of a feature can directly enable the handover of the UE to the neighboring cell when a feature is turned on or off. For example, it is more suitable for the scenario where the base station directly enters the energy-saving state when the serving cell enters NES (sleep, different sleep states), or the scenario where changes are made to the RedCap configuration. The method of combining measurement results also considers the current channel conditions of the UE. For example, it is more suitable for the situation where the base station only supports reception in the inactive state under MBS.

Step 303: The UE evaluates CHO based on the network configuration.
1) If the network only configures the UE to evaluate based on the existing CHO mechanism (that is, only the conventional handover execution conditions are configured), when the UE determines that the handover execution condition is met, the handover is performed.
2) If the network only configures the UE to determine whether to perform CHO based on the turning off of a certain feature, then when the network indicates the turning on or off of one or more features through one of the methods in 1 (broadcast message, RRC, L1/L2 signaling, MCCH change notification), the UE performs handover. Here, the target cell for UE handover may be based on network indication (e.g., the cell identifier/index carried in the L1/L2 message), or based on the UE's own measurement, a cell with the best channel quality is selected as the target cell, or the UE randomly selects the target cell, but the UE's selection range should (preferentially) be the handover candidate cells that have provided access resources; for the case that both network indication and cells that meet the UE measurement requirements exist, the UE shall preferentially access the cell indicated by the network, or access the cell based on the priority order/priority specified by the network.
3) If the network configuration considers both the measurement results and the handover execution condition related to the turning on or off of the feature, UE behavior may be one of the following:
   a) the UE first determines whether the measurement results of each candidate cell meet the corresponding measurement event requirements, if so, the UE then determines whether the network provides an indication related to the turning on or off of the feature, and handover is performed only when both conditions are met; if there are multiple handover candidate cells that meet the conditions, the cell with the best measured channel quality and/or the cell with the lowest potential handover delay and/or the cell whose supported services can better meet the UE's requirements may be preferentially selected as the target cell; or
   b) the UE is required to continuously measure candidate cells, but only when the network indicates the turning on/off of one or more features, will the UE evaluate the measurement conditions of (some or all of) handover candidate cells; and the UE performs handover procedure to the corresponding cell if the measurement conditions are met. In particular, when multiple features are configured with corresponding handover execution conditions, the network can provide measurement priorities and/or evaluation priorities for different features and different candidate cells, so that the UE may prioritize the measurements/evaluations, thereby reducing the number of measurements/evaluations performed by the UE.

It is understandable that for different sleep states of NES, the UE can perform different operations based on the configuration of the network/the definition of a protocol. For example, when the serving cell enters the deep sleep state or the cell is deactivated, the UE needs to perform handover regardless of the serving cell's channel quality conditions, and the target cell is preferably the handover candidate cell that has provided the access resource and/or has not entered deep sleep state; when the serving cell enters the light sleep state, the UE may make a comprehensive decision by comprehensively considering at least one of the following factors: the supported service, UE's location, the current cell load, and the UE measurement results.

If the serving cell provides priorities of different handover candidate cells, the cell with the high priority is preferentially measured and/or evaluated.

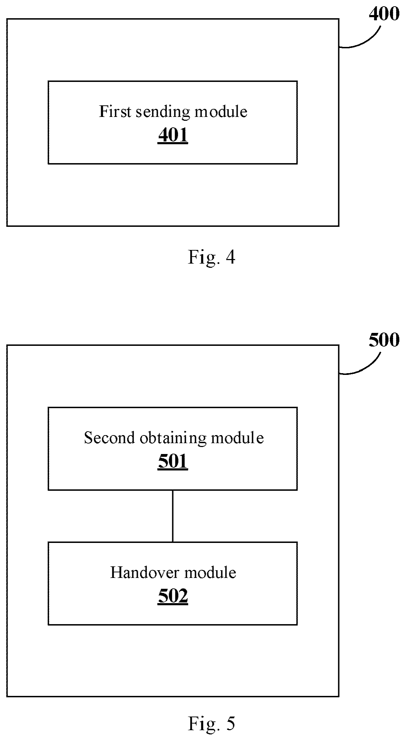

Referring to Fig. 4, an embodiment of the present disclosure provides a conditional handover apparatus, which is applied to a first network side device. The apparatus 400 includes:
a first sending module 401, configured to send a handover execution condition and an access resource to a terminal;
wherein the access resource is provided by a handover candidate cell and is used for turning on or off of one or more features, and the handover execution condition includes turning on or off of a specified feature, and/or a measurement condition, and/or a timer condition.

In an implementation of the present disclosure, the apparatus further includes:
a determination module, configured to determine whether to provide the handover execution condition and/or the access resource to the terminal based on at least one of: the features supported by the serving cell, the measurement result of the terminal, or the current load status.

In an implementation of the present disclosure, the apparatus further includes:
a selection module, configured to select at least some of neighboring cells to serve as handover candidate cells; and
a first obtaining module, configured to obtain access resources provided by the handover candidate cells for turning on or off of the one or more features.

In an implementation of the present disclosure, the apparatus further includes:
a second sending module, configured to send first information to a second network side device in a neighboring cell, wherein the first information is used for at least one of the following:
(1) requesting the neighboring cell to serve as the handover candidate cell;
(2) indicating a feature supported by a serving cell;
(3) indicating a current load status; or
(4) indicating a number of terminals expected to be admitted.

In an implementation of the present disclosure, the apparatus further includes:
a third sending module, configured to send second information to the terminal, wherein the second information is used for indicating at least one of the following:
(1) the access resource is used for turning on or off of multiple specified features;
(2) an access priority of the handover candidate cell;
(3) a measurement priority of the handover candidate cell;
(4) a priority of a measurement condition of the handover candidate cell;
(5) the specified feature is turned on or off; or
(6) a target cell.

In an implementation of the present disclosure, the second information includes at least one of the following: a system message, an RRC dedicated signaling, a layer 1 or layer 2 signaling, a paging message, or a multicast control channel change notification.

In an implementation of the present disclosure, the first sending module is further configured to perform one of the following:
Mode 1: sending the handover execution condition and the access resource to the terminal via a system message;
Mode 2: sending the handover execution condition and the access resource to the terminal through RRC dedicated signaling;
Mode 3: sending the handover execution condition to the terminal through a system message, and sending the access resource to the terminal through RRC dedicated signaling;
Mode 4: sending the handover execution condition to the terminal via RRC dedicated signaling, and sending the access resource to the terminal via a system message.

In an implementation of the present disclosure, the feature includes at least one of NES, MBS, or RedCap UE.

In the embodiment of the present disclosure, the apparatus can implement each process implemented in the method embodiment shown in Fig. 1 of the present disclosure and achieve the same beneficial effects. To avoid repetition, they will not be described here.

Referring to Fig. 5, an embodiment of the present disclosure provides a conditional handover apparatus, which is applied to a terminal. The apparatus 500 includes:
a second obtaining module 501, configured to obtain a handover execution condition and an access resource; and
a handover module 502, configured to perform handover according to the handover execution condition and the access resource;
wherein the access resource is provided by a handover candidate cell and is used for turning on or off of one or more features, and the handover execution condition includes turning on or off of a specified feature, and/or a measurement condition, and/or a timer condition.

In an implementation of the present disclosure, the apparatus further includes:
a first receiving module, configured to receive second information, wherein the second information is used for indicating at least one of the following:
(1) the access resource is used for turning on or off of multiple features;
(2) an access priority of the handover candidate cell;
(3) a measurement priority of the handover candidate cell;
(4) a priority of a measurement condition of the handover candidate cell;
(5) a feature supported by a serving cell is turned on or off; or
(6) a target cell.

In an implementation of the present disclosure, the second information includes at least one of the following: a system message, an RRC dedicated signaling, a layer 1 or layer 2 signaling, a paging message, or a multicast control channel change notification.

In an implementation of the present disclosure, the second obtaining module 501 is further configured to perform one of the following:
Mode 1: obtaining the handover execution condition and the access resource through a system message;
Mode 2: obtaining the handover execution condition and the access resource through RRC dedicated signaling;
Mode 3: obtaining the handover execution condition through a system message and obtaining the access resource through RRC dedicated signaling;
Mode 4: obtaining the handover execution condition through RRC dedicated signaling, and obtaining the access resource through a system message.

In an implementation of the present disclosure, the handover module is further configured to perform one of the following:
Mode 1: in a case that the handover execution condition includes turning on or off of the specified feature, and the specified feature supported by a serving cell is turned on or off, performing the handover;
Mode 2: in a case that the handover execution condition includes the measurement condition and turning on or off of the specified feature, determining whether the handover candidate cell meets the measurement condition; if the handover candidate cell meets the measurement condition, determining whether the serving cell indicates that the specified feature is turned on or off; if the serving cell indicates that the specified feature is turned on or off, performing the handover;
Mode 3: in a case that the handover execution condition includes the measurement condition and turning on or off of the specified feature, measuring the handover candidate cell; in a case that the serving cell indicates that the specified feature is turned on or off, determining whether the handover candidate cell meets the measurement condition, and in a case that the handover candidate cell meets the measurement condition, performing the handover;
Mode 4: in a case that the handover execution condition includes a timer condition and the timer condition is met, performing the handover;
Mode 5: in a case that the handover execution condition includes turning on or off of the specified feature, the timer condition and the measurement condition, and the timer condition is met, if the requirement related to the turning on/off of the feature is met, performing the handover;
Mode 6: in a case that the handover execution condition includes a timer condition and a measurement condition, and the timer condition is met, starting measurement and then performing the handover.

In an implementation of the present disclosure, performing the handover includes:
handing over to a target cell according to the access resource;
wherein the target cell is indicated by the first network side device, or determined by the terminal based on measurement, or randomly selected by the terminal from the handover candidate cells.

In the embodiment of the present disclosure, the apparatus can implement each process implemented in the method embodiment shown in Fig. 2 of the present disclosure and achieve the same beneficial effects. To avoid repetition, they will not be described here.

It should be noted that the division of modules in the embodiments of the present disclosure is illustrative and represents only a logical functional division. In actual implementation, other division methods may be used. Furthermore, the functional modules in the various embodiments of the present disclosure may be integrated into a single processing module, each module may exist physically as a separate module, or two or more modules may be integrated into a single module. The aforementioned integrated modules may be implemented in either hardware or software functional units.

If the integrated module is implemented in the form of a software functional unit and sold or used as an independent product, it can be stored in a processor-readable storage medium. Based on such an understanding, essential parts, or parts contributing to the related art, of the technical solution of the present disclosure may be implemented in a form of a software product. The computer software product is stored in a storage medium and includes several instructions for enabling a computer device (which can be a personal computer, server, or network device, etc.) or a processor to execute all or part of the steps of the method described in each embodiment of the present disclosure. The aforementioned storage medium includes: USB drive, mobile hard disk, read-only memory (ROM), random access memory (RAM), magnetic disk or optical disc, and other media that can store program code.

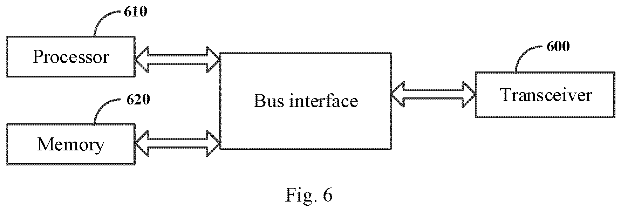

As shown in Fig. 6, an embodiment of the present invention further provides a communication device, including: a memory 620, a transceiver 600, and a processor 610; wherein the memory 600 is configured to store a computer program; and the processor 610 is configured to read the computer program in the memory.

In Fig. 6, the bus architecture may include any number of interconnected buses and bridges, to connect various circuits such as one or more processors specifically represented by processor 610 and a memory represented by memory 620. The bus architecture may also link together various other circuits such as peripheral devices, voltage regulators, and power management circuits, all of which are well known in the art and, therefore, will not be further described herein. The bus interface provides an interface. The transceiver 600 may be a plurality of components, namely, including a transmitter and a transceiver, providing a unit for communicating with various other devices over a transmission medium. The processor 610 is responsible for managing the bus architecture and general processing, and the memory 620 may store data used by the processor 610 when performing operations.

The processor 610 may be a central processing unit (CPU), an application specific integrated circuit (ASIC), a field programmable gate array (FPGA), or a complex programmable logic device (CPLD). The processor may also adopt a multicore architecture.

It should be noted here that the above-mentioned communication device according to the embodiment of the present invention can implement all the method steps implemented by the above-mentioned method embodiment performed by the base station and the terminal, and can achieve the same technical effect. The parts and beneficial effects of this embodiment that are the same as the method embodiment will not be described in detail here.

An embodiment of the present invention further provides a processor-readable storage medium having a computer program stored thereon, wherein when the program is executed by the processor, the steps of the configuration method described above are implemented and the same technical effects are achieved. To avoid repetition, the details are not described here. The readable storage medium can be any available medium or data storage device that can be accessed by the processor, including but not limited to magnetic storage (such as floppy disk, hard disk, magnetic tape, magnetooptical disk (MO)), optical storage (such as compact disc (CD), digital video disc (DVD), Blu-ray disc (BD), high-definition versatile disc (HVD)), and semiconductor storage (such as read-only memory (ROM), erasable programmable read-only memory (EPROM), electrically erasable programmable read-only memory (EEPROM), nonvolatile memory (NAND FLASH), solid-state disk (solid state drive, SSD)).

It should be noted that the technical solutions provided by the embodiments of the present disclosure can be applicable to a variety of systems, particularly 5G systems. For example, applicable systems may include the global system of mobile communication (GSM) system, the code division multiple access (CDMA) system, the wideband code division multiple access (WCDMA), the general packet radio service (GPRS) system, the long-term evolution (LTE) system, the LTE frequency division duplex (FDD) system, the LTE time division duplex (TDD) system, the long-term evolution advanced (LTE-A) system, the universal mobile telecommunication system (UMTS), the world-wide interoperability for microwave access (WiMAX) system, and the 5G New Radio (NR) system. These various systems all include a terminal device and a network device. The system may also include a core network component, such as the evolved packet system (EPS) and the 5G system (5GS).

Those skilled in the art will appreciate that embodiments of the present disclosure may be provided as methods, systems, or computer program products. Thus, the present disclosure may take the form of an entirely hardware embodiment, an entirely software embodiment, or an embodiment combining software and hardware. Furthermore, the present disclosure may take the form of a computer program product implemented on one or more computer-usable storage media (including but not limited to magnetic disk storage and optical storage) containing computer-usable program code.

The present disclosure is described with reference to flowcharts and/or block diagrams of methods, devices (systems), and computer program products according to embodiments of the present disclosure. It should be understood that each process and/or block in the flowcharts and/or block diagrams, as well as combinations of processes and/or blocks in the flowcharts and/or block diagrams, can be implemented by computer-executable instructions. These computer-executable instructions can be provided to a processor of a general-purpose computer, a special-purpose computer, an embedded processor, or other programmable data processing device to produce a machine, such that the instructions executed by the processor of the computer or other programmable data processing device produce a device for implementing the functions specified in one or more processes in the flowcharts and/or one or more blocks in the block diagrams.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more blocks in the block diagram.

These processor-executable instructions may also be loaded onto a computer or other programmable data processing device, so that a series of operational steps are executed on the computer or other programmable device to produce a computer-implemented process, whereby the instructions executed on the computer or other programmable device provide steps for implementing the functions specified in one or more processes in the flowchart and/or one or more blocks in the block diagram.

Obviously, those skilled in the art may make various changes and modifications to the present disclosure without departing from the spirit and scope of the present disclosure. Thus, if these modifications and variations of the present disclosure fall within the scope of the claims of the present disclosure and their equivalents, the present disclosure is intended to include these modifications and variations.

## Claims

1. A conditional handover method, performed by a first network side device, and comprising:
sending a handover execution condition and an access resource to a terminal;
wherein the access resource is provided by a handover candidate cell and is used for turning on or off of one or more features, and the handover execution condition comprises turning on or off of a specified feature, and/or a measurement condition, and/or a timer condition.

2. The method according to claim 1, wherein before sending the handover execution condition and the access resource to the terminal, the method further comprises:
selecting at least some of neighboring cells as the handover candidate cells; and
obtaining access resources provided by the handover candidate cells for turning on or off of the one or more features.

3. The method according to claim 2, wherein, before selecting some of neighboring cells as the handover candidate cells, the method further comprises:
sending first information to a second network side device in a neighboring cell, wherein the first information is used for at least one of the following:
requesting the neighboring cell to serve as the handover candidate cell;
indicating a feature supported by a serving cell;
indicating a current load status; or
indicating a number of terminals expected to be admitted.

4. The method according to any one of claims 1 to 3, further comprising:
sending second information to the terminal, wherein the second information is used for indicating at least one of the following:
the access resource is used for turning on or off of multiple specified features;
an access priority of the handover candidate cell;
a measurement priority of the handover candidate cell;
a priority of a measurement condition of the handover candidate cell;
the specified feature is turned on or off; or
a target cell.

5. The method according to any one of claims 1 to 4, wherein the feature comprises at least one of: network energy saving (NES), multicast broadcast service (MBS), or reduced capacity (RedCap) UE.

6. The method according to any one of claims 1 to 5, wherein
for network energy saving (NES), turning on or off of the feature comprises at least one of the following: cell turning off or on, frequency domain or spatial domain parameter adjustment, increasing or decreasing a transmission periodicity of a common signal, activating or deactivating cell discontinuous transmission and/or cell discontinuous reception, adjusting cell discontinuous transmission or discontinuous reception periodicity, or a network entering different sleep states or data transmission and reception states of NES;
or,
for multicast broadcast service (MBS), turning on or off of the feature comprises at least one of the following: support or non-support of MBS in a cell, support or non-support of reception of MBS in an inactive state, or provision or non-provision of a specified MBS service;
or,
for RedCap, turning on or off of the feature comprises at least one of the following: supporting 20M RedCap UE or supporting 5M RedCap UE.

7. A conditional handover method, performed by a terminal, and comprising:
obtaining a handover execution condition and an access resource; and
performing handover according to the handover execution condition and the access resource;
wherein the access resource is provided by a handover candidate cell and is used for turning on or off of one or more features, and the handover execution condition comprises turning on or off of a specified feature, and/or a measurement condition.

8. The method according to claim 7, further comprising:
receiving second information, wherein the second information is used for indicating at least one of the following:
the access resource is used for turning on or off of multiple features;
an access priority of the handover candidate cell;
a measurement priority of the handover candidate cell;
a priority of a measurement condition of the handover candidate cell;
a feature supported by a serving cell is turned on or off; or
a target cell.

9. The method according to claim 7 or 8, further comprising:
according to different NES states entered by a serving cell, determining whether it is necessary to perform handover according to the handover execution condition and the access resource.

10. The method according to any one of claims 7 to 9, wherein performing handover according to the handover execution condition comprises:
in a case that the handover execution condition comprises turning on or off of the specified feature, and the specified feature supported by a serving cell is turned on or off, performing the handover;
or,
in a case that the handover execution condition comprises the measurement condition and turning on or off of the specified feature, determining whether the handover candidate cell meets the measurement condition; in a case that the handover candidate cell meets the measurement condition, determining whether the serving cell indicates that the specified feature is turned on or off; and in a case that the specified feature is turned on or off, performing the handover;
or,
in a case that the handover execution condition comprises the measurement condition and turning on or off of the specified feature, measuring the handover candidate cell; in a case that the serving cell indicates that the specified feature is turned on or off, determining whether the handover candidate cell meets the measurement condition; and in a case that the handover candidate cell meets the measurement condition, performing the handover;
or,
in a case that the handover execution condition comprises a timer condition and a handover timer elapses, performing the handover;
or,
in a case that the handover execution condition comprises turning on or off of the specified feature, the timer condition and the measurement condition, and the handover timer elapses, determining whether the serving cell indicates that the specified feature is turned on or off, and in a case that the specified feature is turned on or off, performing the handover;
or,
in a case that the handover execution condition comprises the timer condition and the measurement condition, and the handover timer elapses, determining whether the handover candidate cell meets the measurement condition, and in a case that the handover candidate cell meets the measurement condition, performing the handover.

11. A conditional handover apparatus for a first network side device, comprising:
a first sending module, configured to send a handover execution condition and an access resource to a terminal;
wherein the access resource is provided by a handover candidate cell and is used for turning on or off of one or more features, and the handover execution condition comprises turning on or off of a specified feature, and/or a measurement condition, and/or a timer condition.

12. A conditional handover apparatus for a terminal, comprising:
a second obtaining module, configured to obtain a handover execution condition and an access resource; and
a handover module, configured to perform handover according to the handover execution condition and the access resource;
wherein the access resource is provided by a handover candidate cell and is used for turning on or off of one or more features, and the handover execution condition comprises turning on or off of a specified feature, and/or a measurement condition, and/or a timer condition.

13. A communication device comprising: a memory, a transceiver, and a processor; wherein the memory is configured to store a computer program, and the processor is configured to execute the computer program in the memory to implement the steps of the method according to any one of claims 1 to 10.

14. A processor-readable storage medium having a computer program stored thereon, wherein when the computer program is executed by a processor, the steps of the method according to any one of claims 1 to 10 are implemented.
